# EUROPEAN PATENT SPECIFICATION

(11) **EP 2 418 380 B1**
(45) Date of publication and mention of the grant of the patent: **02.05.2018**
(21) Application number: 10761369.7
(22) Date of filing: 29.03.2010
(51) Int. Cl.: F03D 7/04, F03D 7/02

(54) **PITCH CONTROL DEVICE FOR WINDMILL**
STEIGUNGSWINKELSTEUERUNG FÜR WINKRAFTANLAGE
DISPOSITIF DE COMMANDE DU PAS POUR ÉOLIENNE

(30) Priority: 06.04.2009 JP 2009091818
(43) Date of publication of application: 15.02.2012
(73) Proprietor: Nabtesco Corporation, Tokyo 102-0093 (JP)
(72) Inventor: KODAMA, Haruo, Fuwa-gun Gifu 503-2121 (JP)
(74) Representative: Isarpatent
(86) International application number: PCT/JP2010/002246
(87) International publication number: WO 2010/116663

(56) References cited:
- JP-A- 2003 222 070
- JP-A- 2008 075 521

## Description

### Technical Field

The present invention relates to a pitch control device for a windmill that includes a battery capable of applying electricity to a motor of a pitch drive device for changing the pitch angle of a blade of a windmill that is provided rotatably on a main shaft portion of the windmill, and that controls the pitch angle of the blade with the electricity of the battery such that the pitch angle is changed in a direction in which the wind pressure exerted on the blade is reduced.

### Background Art

A windmill may be provided with a pitch control device for a windmill that controls the pitch angle of blades provided rotatably on a main shaft portion of the windmill. As such a pitch control device for a windmill, a pitch control device for a windmill is known that includes a battery capable of applying electricity to the motor of a pitch drive device for changing the pitch angle of a blade of a windmill, and that controls the pitch angle of the blade with the electricity of the battery so as to change the pitch angle in a direction in which the wind pressure exerted on the blade is reduced (see Patent Document 1). In the pitch control device for a windmill disclosed in Patent Document 1, during a normal operation, the motor of the pitch drive device is driven with electricity supplied from an external power source via an electricity controller (221) serving as a motor controller that controls supply of electricity to the motor of the pitch drive device to control operation of the motor. In the case of a power failure, on the other hand, the source of electricity to the motor of the pitch drive device is switched from the external power source to a battery (220) by the electricity controller. Then, the pitch angle of the blades is controlled such that the pitch angle is changed in a direction in which the wind pressure exerted on the blades is reduced (such that feathering of the blades is performed). This is aimed at preventing the windmill from being damaged by an abnormal increase in the rotational speed of the blades and the main shaft portion.
In Patent Document 2, a wind turbine and an operating method thereof are disclosed.

### Citation List

### Patent Document

Patent Document 1: JP 2003-222070A (page 5, FIG. 3)
Patent Document 2: EP 1 903 213 A2

### Disclosure of the Invention

### Problem to be Solved by the Invention

The pitch control device for a windmill disclosed in Patent Document 1 is configured such that at the time of occurrence of an abnormality in the external power source, feathering is performed in which the pitch angle is changed in a direction in which the wind pressure exerted on the blades is reduced, by supplying electricity from the battery. However, the life of a battery changes significantly depending on the frequency of use. In a state in which the electricity storage capability of the battery has been reduced contrary to expectations, there is the possibility that a situation in which feathering cannot be performed may occur, resulting in damage to the windmill. Furthermore, in the case of failure of the motor controller that controls the motor of the pitch drive device, there is also the possibility that a situation where feathering cannot be performed may occur, resulting in damage to the windmill.

In view of the foregoing circumstances, it is an object of the present invention to provide a pitch control device for a windmill that can perform feathering not only in cases where an abnormality occurs in the external power source, but also in cases where a reduction in the electricity storage capability of the battery contrary to expectations or where a failure occurs in the motor controller that controls the motor of the pitch drive device.

### Means for Solving the Problem

A pitch control device for a windmill according to a first aspect according to the present invention for achieving the above-described object relates to a pitch control device for a windmill that includes a battery capable of applying electricity to a motor of a pitch drive device for changing a pitch angle of a blade of a windmill that is rotatably provided on a main shaft portion of the windmill, and that controls the pitch angle of the blade with the electricity of the battery such that the pitch angle is changed in a direction in which the wind pressure exerted on the blade is reduced. The pitch control device for a windmill of the first aspect of the present invention includes: a motor controller that controls storage and discharge of electricity into and from the battery and controls the motor based on a control signal from a pitch controller that outputs the control signal for changing the pitch angle of the blade; an induction motor provided as the motor; a switching box capable of switchably connecting an external power source supplied as an alternating-current power source and the battery to the induction motor; a first abnormality detector that detects an abnormality of the external power source; and a second abnormality detector that detects an abnormality of the motor controller; wherein, during a normal operation, the motor controller controls the induction motor based on a control signal from the pitch controller; wherein, when the first abnormality detector detects an abnormality of the external power source, the switching box connects the induction motor to the battery, and controls the pitch angle of the blade such that the pitch angle is changed in a direction in which wind pressure is reduced, and, when the second abnormality detector detects an abnormality of the motor controller, the switching box directly connects the induction motor to the external power source without the motor controller intervening, and controls the pitch angle of the blade such that the pitch angle is changed in a direction in which wind pressure is reduced.

According to this aspect of the invention, the provision of the switching box provides for a configuration in which electricity can be supplied to the induction motor switchably from the external power source and the battery. When an abnormality occurs in the motor controller that controls the induction motor of the pitch drive device or in the battery, the abnormality is detected by the second abnormality detector. Further, based on the detection result, the induction motor is connected to the external power source serving as an alternating-current power source by the switching box, and feathering is performed in which the pitch angle is changed in a direction in which the wind pressure exerted on the blade is reduced. On the other hand, when an abnormality occurs in the external power source, the abnormality is detected by the first abnormality detector. Based on the detection result, the induction motor is connected to the battery by the switching box, and feathering is performed. Accordingly, even if an abnormality occurs in one of the external power source, the battery, and the motor controller, feathering is reliably performed, thus preventing the windmill from being damaged by an abnormal increase in the rotational speed of the blade and the main shaft portion.

Therefore, according to the present invention, it is possible to provide a pitch control device for a windmill that can perform feathering not only in cases where an abnormality occurs in the external power source, but also in cases where a reduction in the electricity storage capability of the battery contrary to expectations or where a failure occurs in the motor controller that controls the motor of the pitch drive device.

According to a second aspect of a pitch control device for a windmill of the present invention, the pitch control device for a windmill of the first aspect includes, as the second abnormality detector, a CPU abnormality detector that monitors a CPU of the motor controller and emits an abnormality signal upon detection of an abnormality.

According to this aspect of the invention, the CPU abnormality detector is provided as the second abnormality detector. Accordingly, when an abnormality occurs in the CPU (Central Processing Unit) of the motor controller, it is possible to detect the abnormality swiftly and reliably and perform feathering. After performing feathering, the CPU in which the abnormality has occurred can be replaced, for example, and thereby the windmill can be restored promptly without damaging the windmill.

According to a third aspect of a pitch control device for a windmill of the present invention, the pitch control device for a windmill of the first or second aspect includes, as the second abnormality detector, a motor control abnormality detector that monitors an output signal from the motor controller to the induction motor and emits an abnormality signal upon detection of an abnormality.

According to this aspect of the invention, the motor control abnormality detector is provided as the second abnormality detector. Accordingly, when an abnormality occurs in the output signal from the motor controller to the induction motor, it is possible to detect the abnormality swiftly and reliably and perform feathering. After performing feathering, the motor controller in which the abnormality has occurred can be replaced partly or entirely, and thereby the windmill can be restored promptly without damaging the windmill.

According to a fourth aspect of a pitch control device for a windmill of the present invention, the pitch control device for a windmill of any one of the first to third aspects includes, as the second abnormality detector, a power abnormality detector that monitors the temperature of a power module portion for controlling electricity supplied to the induction motor and emits an abnormality signal upon detection of an abnormality.

According to this aspect of the invention, the power abnormality detector is provided as the second abnormality detector. Accordingly, when a power module portion of the motor controller has undergone a temperature increase to cause a temperature abnormality, it is possible to detect the abnormality swiftly and reliably and perform feathering. It is also possible to promptly prevent the other devices from being damaged by the heat from the power module portion that has undergone a temperature increase. After performing feathering, the portion in which the abnormality has occurred can be replaced, for example, and thereby the windmill can be restored promptly without damaging the windmill.

According to a fifth aspect of a pitch control device for a windmill of the present invention, the pitch control device for a windmill of any one of the first to fourth aspects includes, as the second abnormality detector, a transmission abnormality detector that monitors the control signal transmitted from the pitch controller to the motor controller and emits an abnormality signal upon detection of an abnormality.

According to this aspect of the invention, the transmission abnormality detector is provided as the second abnormality detector. Accordingly, when an abnormality occurs in a control signal that is transmitted from the pitch controller and is received by the motor controller, it is possible to detect the abnormality swiftly and reliably and perform feathering. After performing feathering, the portion in which the abnormality has occurred can be replaced, for example, and thereby the windmill can be restored promptly without damaging the windmill.

According to a sixth aspect of a pitch control device for a windmill of the present invention, the pitch control device for a windmill according to any one of the first to fifth aspects includes, as the second abnormality detector, a controller self-abnormality detector that monitors the output signal from the motor controller and a position of an output shaft of the induction motor, detects an abnormality when the magnitude of deviation in correspondence between the output signal and the position of the output shaft exceeds a predetermined value, and emits an abnormality signal.

According to this aspect of the invention, the controller self-abnormality detector is are provided as the second abnormality detector. Accordingly, when the deviation between the output signal from the motor controller and the position of the output shaft of the induction motor is increased, it is possible to detect this swiftly and reliably and perform feathering. After performing feathering, the portion in which the abnormality has occurred can be replaced, for example, and thereby the windmill can be restored promptly without damaging the windmill.

According to a seventh aspect of a pitch control device for a windmill of the present invention, in the pitch control device for a windmill according to any one of the first to sixth aspects, the motor controller, the battery, and the second abnormality detector are provided for each of the three blades provided in the windmill, and the pitch control device includes, as at least one of the second abnormality detectors, a controller mutual abnormality detector that compares output signals from the motor controllers with one another, detects an abnormality when the magnitude of deviation of the output signals between the motor controllers exceeds a predetermined value, and emits an abnormality signal.

According to this aspect of the invention, the controller mutual abnormality detector is provided as the second abnormality detector. Accordingly, when the mutual deviation among the output signals from the motor controllers respectively corresponding to the three blades is increased, it is possible to detect this swiftly and reliably and perform feathering. After performing feathering, the portion in which the abnormality has occurred can be replaced, for example, and thereby the windmill can be restored promptly without damaging the windmill.

### Effects of the Invention

According to the present invention, it is possible to provide a pitch control device for a windmill that can perform feathering not only in cases where an abnormality occurs in the external power source, but also in cases where a reduction in the electricity storage capability of the battery contrary to expectations or where a failure occurs in the motor controller that controls the motor of the pitch drive.

### Brief Description of the Drawings

[FIG. 1] FIG. 1 is a perspective view showing a windmill to which a pitch control device for a windmill according to one embodiment of the present invention is applied.
[FIG. 2] FIG. 2 is an enlarged cross-sectional view showing the portion of the windmill shown in FIG. 1 where a blade is attached to a hub.
[FIG. 3] FIG. 3 is a block diagram showing a power supply system of a pitch control device for a windmill according to one embodiment of the present invention.
[FIG. 4] FIG. 4 is a block diagram showing a communication system of the pitch control device for a windmill shown in FIG. 3.
[FIG. 5] FIG. 5 is a block diagram showing the configuration of a motor control unit of the pitch control device for a windmill shown in FIG. 4.

### Description of Embodiments

Hereinafter, an embodiment for carrying out the present invention will be described with reference to the accompanying drawings. The embodiment of the present invention is widely applicable as a pitch control device for a windmill that includes a battery capable of applying electricity to a motor of a pitch drive device for changing the pitch angle of a blade of a windmill that is provided rotatably on a main shaft portion of the windmill, and that controls the pitch angle of the blade with the electricity of the battery such that the pitch angle is changed in a direction in which the wind pressure exerted on the blade is reduced.

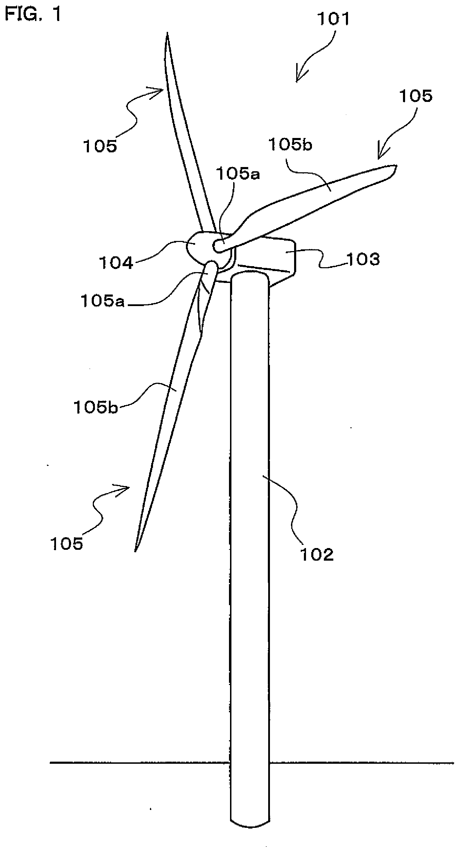

FIG. 1 is a perspective view showing a windmill 101 to which a pitch control device 1 for a windmill (hereinafter, also simply referred to as "pitch control device 1") according to one embodiment of the present invention is applied. As shown in FIG. 1, the windmill 101 includes, for example, a tower 102, a nacelle 103, a hub (main shaft portion) 104, and blades 105. The tower 102 is installed, extending vertically upward from the ground. The nacelle 103 is rotatably disposed on the tower 102, such that it can be turned around in a horizontal plane by a yaw drive device (not shown). A power transmission shaft, an electricity generator, and so forth, which are not shown, are disposed inside the nacelle 103. The hub 104, which constitutes a main shaft portion in this embodiment, is coupled to the aforementioned power transmission shaft and is rotatably provided on the nacelle 103. A plurality of (in this embodiment, three) blades 105 are attached to the hub 104, extending radially at equal angle intervals. The blades 105 are each configured by a hollow cylindrical shaft portion 105a that can be attached to the hub 104, and a blade portion 105b for receiving wind.

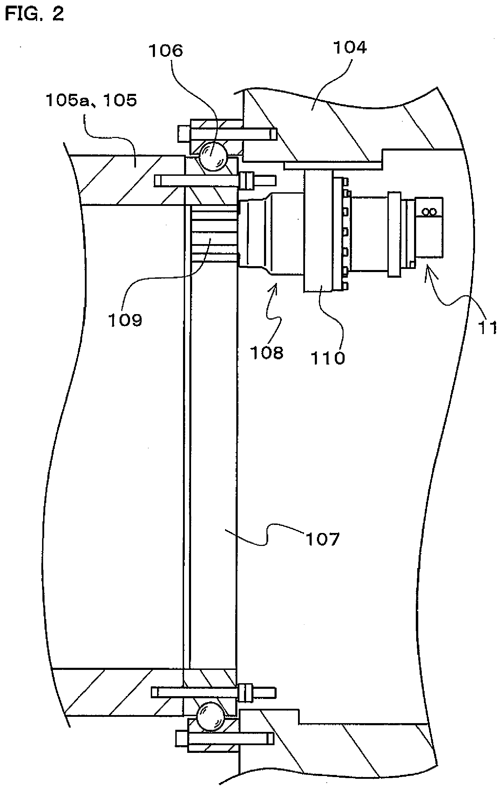

FIG. 2 shows an enlarged cross-sectional view showing the portions where the blades 105 are attached to the hub 104, together with a pitch drive device 108 and an induction motor 11 serving as the motor for driving the pitch drive device 108. The hub 104 has openings formed in portions to which the blades 105 are attached, and the blades 105 are disposed so as to face those openings at the ends of their shaft portions 105a. The blade 105 is supported at its shaft portion 105a on the hub 104 via a bearing 106, and is rotatably provided on the hub 104. A ring gear 107 having internal teeth disposed on its inner circumferential side is provided at the end of the shaft portion 105a on the side attached to the hub 104 (in FIG. 2, the internal teeth of the ring gear 107 are not shown). The ring gear 107 is disposed such that its shaft center coincides with the shaft center of the shaft portion 105a, and is configured so as to mesh with an output pinion 109 of the pitch drive device 108, which is configured as a speed reducer.

Three pitch drive devices 108 are provided, respectively corresponding to the three blades 105, and each of the pitch drive devices 108 is attached via a bracket 110 to the inside of an opening portion of the hub 104 to which the blade 105 is attached. The pitch drive devices 108 are each coupled to an induction motor 11, reduce the speed of the driving force input from the induction motor 11 and output the driving force to the pinion 109, thereby causing the blade 105 to rotate about its shaft center with respect to the hub 104, together with the ring gear 107 that meshes with the pinion 109. The pitch drive devices 108 are thereby configured to change the pitch angle of the blades 105.

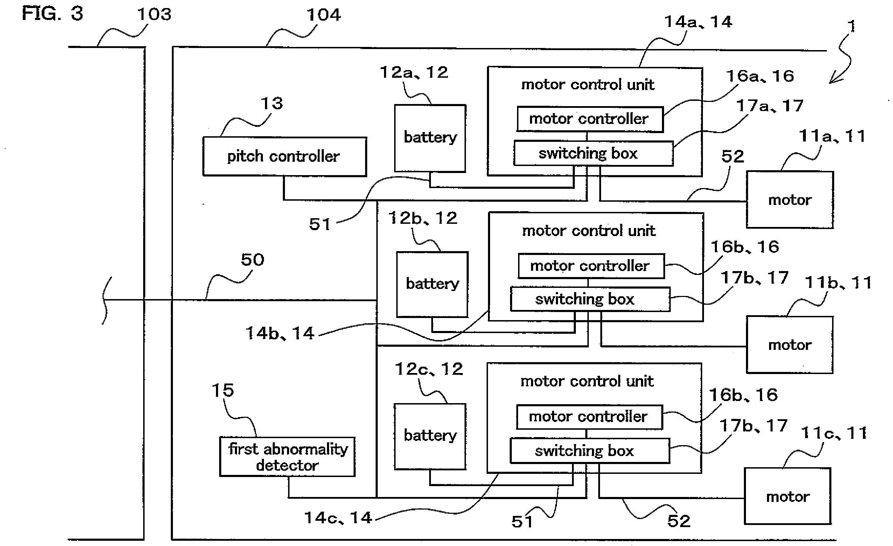

Next, the pitch control device 1 according to one embodiment of the present invention will be described. FIG. 3 is a block diagram showing a power supply system of the pitch control device 1. As shown in FIG. 3, the pitch control device 1 is disposed inside the hub 104. The pitch control device 1 includes, for example, a plurality of (in this embodiment, three) induction motors 11 (11a, 11b, 11c), a plurality of (in this embodiment, three) batteries 12 (12a, 12b, 12c), a plurality of (in this embodiment, three) motor control units 14 (14a, 14b, 14c), and a first abnormality detector 15.

The three induction motors 11 (11a, 11b, 11c) are respectively coupled to the pitch drive devices 108 that respectively change the pitch angles of the three blades 105, and are installed so as to be able to output the driving force for changing the pitch angles of the blades 105. The three batteries 12 are provided so as to be able to respectively apply electricity to the induction motors 11 via the motor control units 14. That is, the battery 12a is configured to apply electricity to the induction motor 11a, the battery 12b is configured to apply electricity to the induction motor 11b, and the battery 12c is configured to apply electricity to the induction motor 11c. Note that storage of electricity into the batteries 12 is performed by supplying the electricity of an external power source supplied as an alternating-current power source via a wire 50 provided from the nacelle 103 to the hub 104 via the motor control units 14.

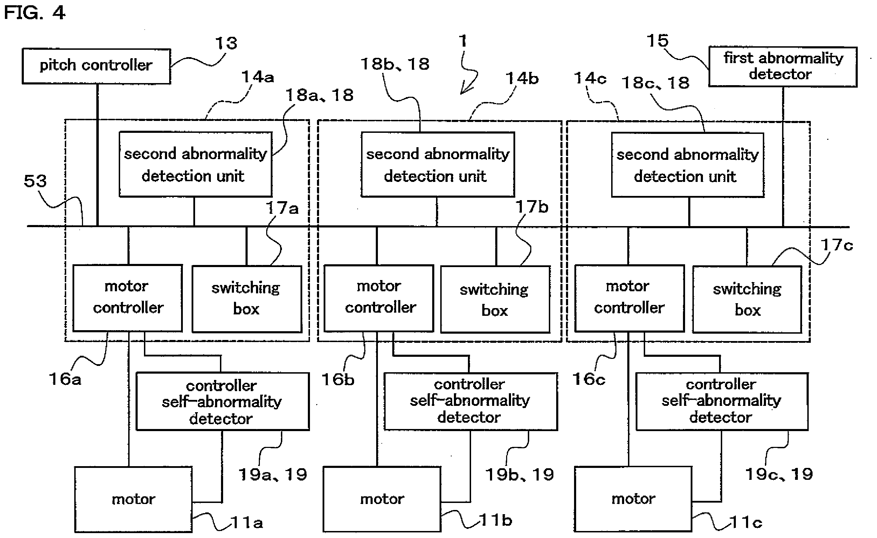

FIG. 4 is a block diagram showing a communication system of the pitch control device 1. Here, the pitch controller 13, which outputs a control signal to motor controllers 16, which will be described later, will be described. The pitch controller 13 shown in FIGS. 3 and 4 includes, for example, a CPU (Central Processing Unit) and a memory, which are not shown, is connected to a communication line 53 configured as a bus, and is configured to be capable of communication with motor controllers 16, which will be described later, via the communication line 53. The pitch controller 13 determines the target pitch angle of the blades 105 such that rotation is properly performed in accordance with the wind pressure exerted on the blades 105, in accordance with a result of a wind pressure detection performed by a wind pressure sensor (not shown). Based on this target pitch angle, the pitch controller 13 outputs a control signal for changing the pitch angle of the blades 105 to the communication line 53.

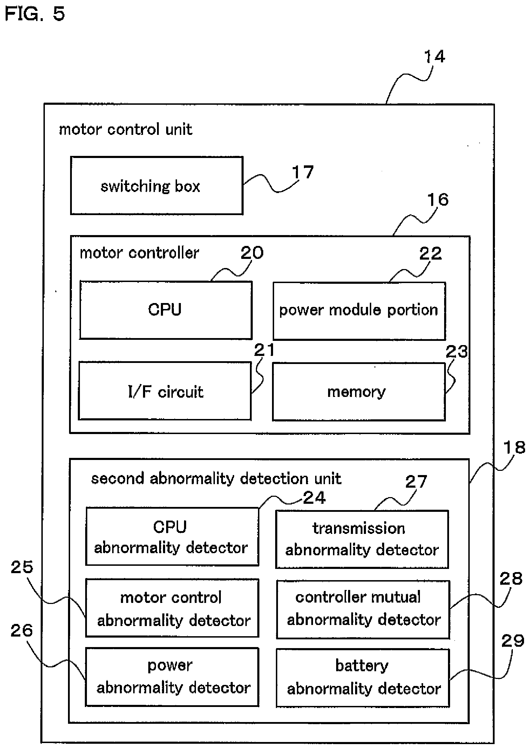

As described above, three motor control units 14 (14a, 14b, 14c) are provided, and installed so as to respectively correspond to the induction motors 11 (11a, 11b, 11c). As shown in the block diagram in FIG. 5, a motor controller 16, a switching box 17, and a second abnormality detection unit 18 are installed in each of the motor control units 14 (14a, 14b, 14c).

The motor controllers 16 (16a, 16b, 16c) shown in FIGS. 3 to 5 each include, for example, a CPU (Central Processing Unit) 20, an interface circuit (I/F circuit) 21, a power module portion 22, and a memory 23. Each of the motor controllers 16 is connected to the communication line 53 so as to be able to transmit and receive a signal, and is also connected to an induction motor 11 and a battery 12 so as to be capable of communication therewith (illustration of connection between the motor controllers 16 and the corresponding batteries 12 is omitted in FIG. 4).

The motor controllers 16 each control storage of electricity supplied from the external power source via the wire 50 into a battery 12 and discharge of electricity stored in the battery 12 to an induction motor 11. That is, the motor controller 16a controls storage and discharge of electricity into and from the battery 12a, the motor controller 16b controls storage and discharge of electricity into and from the battery 12b, and the motor controller 16c controls storage and discharge of electricity into and from the battery 12c. Further, the motor controllers 16 each receive, via the communication line 53, the aforementioned control signal that is output (transmitted) from the pitch controller 13, and control operation of the corresponding induction motor 11 based on the control signal. That is, based on the control signal from the pitch controller 13, the motor controller 16a controls the induction motor 11a, the motor controller 16b controls the induction motor 11b, and the motor controller 16c controls the induction motor 11c.

Note that input of the control signal from the pitch controller 13 and output of the command signal to the induction motor 11 and the battery 12 are performed via the interface circuit 21. The memory 23 stores a program for executing the processing of the motor controller 16, which controls storage and discharge of electricity into and from the battery 12 and operation of the induction motor 11, and the program is read and executed by the CPU 20. The power module portion 22 is provided as a power transistor module, and is configured to control electricity supplied to the induction motor 11.

The switching boxes 17 (17a, 17b, 17c) shown in FIGS. 3 to 5 are each provided as a switching mechanism that switches the state of connection among the external power source, a battery 12, and an induction motor 11, and are each connected to the wire 50 to which the electricity from the external power source is supplied, the wire 51 connected to the battery 12, and the wire 52 connected to the induction motor 11. This provides for a configuration that can switchably connect the external power source and the battery 12 to the induction motor 11. That is, the switching box 17a is configured to switchably connect the external power source and the battery 12a to the induction motor 11a, the switching box 17b is configured to switchably connect the external power source and the battery 12b to the induction motor 11b, and the switching box 17c is configured to switchably connect the external power source and the battery 12c to the induction motor 11c. The switching boxes 17 are each connected to the communication line 53 so as to be able to receive a signal. Note that during a normal operation in which no abnormality is detected by the first abnormality detector 15 or a second abnormality detector, which will be described later, the switching boxes 17 are in the state of connecting the external power source to the induction motors 11 via the motor controllers 16.

The first abnormality detector 15 shown in FIGS. 3 and 4 is electrically connected to the wire 50, and is connected to the communication line 53 so as to be able to transmit and receive a signal. The first abnormality detector 15 is provided as a circuit board that detects an abnormality of the external power source, such as a power supply failure, via the wire 50. Upon detection of an abnormality of the external power source, the first abnormality detector 15 emits an external power source abnormality signal and outputs the signal to the communication line 53.

When the first abnormality detector 15 detects an abnormality of the external power source and the external power source abnormality signal is transmitted as described above, the external power source abnormality signal is received by the switching boxes 17 via the communication line 53. Then, the switching boxes 17 respectively connect the induction motors 11 to the batteries 12 (i.e., connect the wire 51 to the wire 52). Thereby, the induction motors 11 are rotated with the electricity of the corresponding batteries 12 such that feathering is performed in which the pitch angle is changed in a direction in which the wind pressure exerted on the blades 105 is reduced. Then, the induction motors 11 are stopped at a predetermined rotational angle position (feather position) that brings about the feathering state. Note that in the state in which feathering has been performed (the state in which the induction motor 11 have been stopped at the feather position), the pitch angle of the blades 105 is fixed in a state in which the surface of the blade portions 105b of the blades 105 is parallel to the direction of wind such that substantially no wind pressure is exerted on the blades 105.

The second abnormality detection units 18 (18a, 18b, 18c) shown in FIGS. 3 to 5 each include a plurality of circuit boards, and the circuit boards respectively constitute a plurality of second abnormality detectors (24 to 29) that detect an abnormality of a battery 12 or a motor controller 16. The second abnormality detectors (24 to 29) are connected to the communication line 53 so as to be able to transmit and receive a signal. The pitch control device 1 also includes controller self-abnormality detectors 19 (19a, 19b, 19c) shown in FIG. 4 as second abnormality detectors that are provided independently of the second abnormality detection unit 18. Note that as shown in FIGS. 3 to 5, the pitch control device 1 includes a motor controller 16, a battery 12, and a second abnormality detector (19, 24 to 29) for each of the three blades 105 of the windmill 101.

The CPU abnormality detector 24 of the second abnormality detection units 18 monitors the operational state of the CPU 20 of a motor controller 16, emits a CPU abnormality signal upon detection of an abnormality regarding the operational state, and outputs the signal to the communication line 53. Note that the monitoring of the operational state of the CPU 20 performed by the CPU abnormality detector 24 is performed, for example, by periodically outputting a predetermined signal to the communication line 53 and performing detection by the CPU abnormality detector 24 so as to determine whether the signal is appropriately output.

The motor control abnormality detector 25 of the second abnormality detection units 18 monitors the output signal from a motor controller 16 to an induction motor 11. Upon detection of an abnormality of the output signal, the motor control abnormality detector 25 emits a motor control abnormality signal and outputs the signal to the communication line 53. Note that the monitoring performed by the motor control abnormality detector 25 is performed, for example, by periodically outputting a predetermined signal that is the same as the output signal being output to the induction motor 11, from the motor controller 16 to the communication line 53, and performing detection by the motor control abnormality detector 25 so as to determine whether the signal is appropriately output.

The power abnormality detector 26 of the second abnormality detection units 18 is provided with a temperature sensor (not shown) capable of measuring the temperature of the power module portion 22 of a motor controller 16, and monitors the temperature of the power module portion 22. The power abnormality detector 26 detects an abnormality of the temperature of the power module portion 22 when the measured temperature exceeds a predetermined temperature. Upon detection of such a temperature abnormality, the power abnormality detector 26 emits a power abnormality signal and outputs the signal to the communication line 53.

The transmission abnormality detector 27 of the second abnormality detection units 18 monitors the control signal transmitted from the pitch controller 13 to a motor controller 16 (i.e., the control signal received from the motor controller 16). Upon detection of an abnormality of the control signal, the transmission abnormality detector 27 emits a transmission abnormality signal and outputs the signal to the communication line 53. Note that the monitoring performed by the transmission abnormality detector 27 is performed, for example, by causing the same control signal to be transmitted from the pitch controller 13 multiple times with shifted timing (at staggered times), and performing a comparison with the transmission abnormality detector 27 so as to determine whether the received control signals are the same. Besides the method in which the same control signal is transmitted multiple times with shifted timing over a single communication line 53, it is possible to perform a method in which a plurality of communication lines are provided, the same control signal is transmitted to the plurality of communication lines from the pitch controller 13, and the transmission abnormality detector 27 receives the control signals from the plurality of communication lines and compares those control signals.

The controller mutual abnormality detector 28 of the second abnormality detection units 18 is configured to compare the output signals from the plurality of motor controllers 16 with one another. That is, the controller mutual abnormality detector 28 of the second abnormality detection unit 18a compares the output signal from the motor controller 16a, the output signal from the motor controller 16b, and the output signal from the motor controller 16c with one another. At this time, a process for comparing the output signal from the motor controller 16a with the output signal from the motor controller 16b, a process for comparing the output signal from the motor controller 16b with the output signal from the motor controller 16c, and a process for comparing the output signal from the motor controller 16c with the output signal from the motor controller 16a are performed, for example, by the controller mutual abnormality detector 28 of the second abnormality detection unit 18a.

Processes similar to the above-described comparing processes performed by the controller mutual abnormality detector 28 of the second abnormality detection unit 18a are also performed by the controller mutual abnormality detectors 28 of the second abnormality detection unit 18b and the second abnormality detection unit 18c. Note that the motor controllers 16 periodically output the output signals to the induction motors 11 to the communication line 53 such that the controller mutual abnormality detectors 28 can receive the output signals. If it is determined as the result of the above-described comparing processes that the magnitude of deviation of the output signals among the plurality of motor controllers 16 exceeds a predetermined value, the controller mutual abnormality detector 28 detects an abnormality, emits a controller mutual abnormality signal, and outputs the signal to the communication line 53. Note that the controller mutual abnormality detector 28 may not necessarily be installed in each of the second abnormality detection units 18, and it is possible to detect an abnormality relating to the deviation of the output signals among the plurality of motor controllers 16 and emit a controller mutual abnormality signal as long as the controller mutual abnormality detector 28 is provided in at least one of the second abnormality detection units 18.

The battery abnormality detector 29 of the second abnormality detection units 18 monitors a signal relating to the amount of electricity stored in or the remaining quantity of electricity in a battery 12, and detects an abnormality of the electricity storage capability of the battery 12 based on that signal. Note that the above-described signal is periodically output from the battery 12 to the communication line 53 via the corresponding motor controller 16. Upon detection of an abnormality of the electricity storage capability of the battery 12, the battery abnormality detector 29 emits a battery abnormality signal and outputs the signal to the communication line 53.

The controller self-abnormality detectors 19 (19a, 19b, 19c) shown in FIG. 4 are provided as the second abnormality detectors as with the second abnormality detectors (24 to 29) installed in the second abnormality detection unit 18, but they are provided as circuit boards that are installed independently of the second abnormality detection units 18. The controller self-abnormality detectors 19 are each connected to a motor controller 16 and a rotational position sensor (not shown) that is attached to an induction motor 11 to detect the rotational position of the output shaft of the induction motor 11. The controller self-abnormality detectors 19 each monitor the output signal from the motor controller 16 and the position of the output shaft of the induction motors 11. When the magnitude of deviation in correspondence between the output signal and the position of the output shaft exceeds a predetermined value, the controller self-abnormality detectors 19 detect an abnormality and emit a controller self-abnormality signal. The controller self-abnormality signal is output to the communication line 53 via the motor controller 16.

As described above, when an abnormality is detected by one of the second abnormality detectors (19, 24 to 29), the abnormality signal is emitted and output to the communication line 53. That is, one of the CPU abnormality signal, the motor control abnormality signal, the power abnormality signal, the transmission abnormality signal, the controller mutual abnormality signal, the battery abnormality signal, and the controller self-abnormality signal is output to the communication line 53. When one of the above-described abnormality signals is emitted, that abnormality signal is received by the switching box 17 via the communication line 53, and the switching box 17 directly connects the induction motor 11 to the external power source without intervening the motor controller 16 (i.e., connects the wire 50 to the wire 52). Thereby, the induction motor 11 is rotated with the electricity of the external power source such that feathering is performed in which the pitch angle is changed in a direction in which the wind pressure exerted on the blade 105 is reduced. The induction motor 11 is stopped at a predetermined rotational angle position (feather position) that brings about the feathering state, and the pitch angle of the blade 105 is fixed in a state in which the surface of the blade portion 105b of the blade 105 is parallel to the direction of wind.

When, the switching box 17 directly connects the induction motor 11 to the external power source based on the abnormality signal emitted by one of the second abnormality detectors (19, 24 to 29) and the induction motor 11 is thus rotated, the induction motor 11 is rotated until a limit switch (not shown) detects that the induction motor 11 is rotated to a predetermined rotational angle position. Upon the above-described detection by the limit switch, the brake (not shown) of the induction motor 11 is activated to stop the rotation of the induction motor 11, and the pitch angle of the blade 105 is fixed in the feathering state, i.e., the state in which the surface of the blade 105 is parallel to the direction of wind.

Next, the operation performed during the feathering performed by the pitch control device 1 described above will be described. During a normal operation in which no abnormality has occurred in any of the external power source, the batteries 12, and the motor controllers 16, the motor controllers 16 control the induction motors 11 based on a control signal from the pitch controller 13, thus driving the pitch drive devices 108. Thereby, the pitch angle of the blades 105 is controlled by the pitch control device 1 such that the pitch angle corresponds to the wind pressure exerted on the blades 105.

When an abnormality occurs in the external power source, the first abnormality detector 15 detects the abnormality and emits an external power source abnormality signal. Then, the switching box 17 that has received the external power source abnormality signal connects the battery 12 to the induction motor 11, and the pitch angle of the blade 105 is controlled so as to bring about the feathering state. When an abnormality occurs in the batteries 12 and the motor controllers 16, one of the second abnormality detectors (19, 24 to 29) detects the abnormality and emits the abnormality signal. Then, the switching box 17 that has received the abnormality signal directly connects the external power source to the induction motor 11, and the pitch angle of the blade 105 is controlled so as to bring about the feathering state. In this way, even if an abnormality occurs in any of the external power source, the batteries 12, and the motor controllers 16, feathering can be performed reliably, thus preventing the windmill 101 from being damaged by an abnormal increase in the rotational speed of the blades 105 and the hub 104.

As described above, with the pitch control device 1 for a windmill, it is possible to provide a pitch control device for a windmill that can perform feathering not only in cases where an abnormality occurs in the external power source, but also in cases where a reduction in the electricity storage capability of the battery 12 contrary to expectations or where a failure occurs in the motor controller 16 that controls the induction motor 11 of the pitch drive device 108.

With the pitch control device 1 for a windmill, CPU abnormality detectors 24 are provided as the second abnormality detectors. Accordingly, when an abnormality occurs in a CPU 20 of the motor controllers 16, it is possible to detect the abnormality swiftly and reliably and perform feathering. After performing feathering, the CPU 20 in which the abnormality has occurred can be replaced, for example, and thereby the windmill 101 can be restored promptly without damaging the windmill.

With the pitch control device 1 for a windmill, motor control abnormality detectors 25 are provided as the second abnormality detectors. Accordingly, when an abnormality occurs in an output signal from the motor controllers 16 to the induction motors 11, it is possible to detect the abnormality swiftly and reliably and perform feathering. After performing feathering, the motor controller 16 in which the abnormality has occurred can be replaced partly or entirely, and thereby the windmill 101 can be restored promptly without damaging the windmill.

With the pitch control device 1 for a windmill, power abnormality detectors 26 are provided as the second abnormality detectors. Accordingly, when a power module portion 22 of the motor controllers 16 has undergone a temperature increase to cause a temperature abnormality, it is possible to detect the abnormality swiftly and reliably, and perform feathering. It is also possible to promptly prevent the other devices from being damaged by the heat from the power module portion 22 that has undergone a temperature increase.

With the pitch control device 1 for a windmill, transmission abnormality detectors 27 are provided as the second abnormality detectors. Accordingly, when an abnormality occurs in a control signal that is transmitted from the pitch controller 13 and is received by the corresponding motor controller 16, it is possible to detect the abnormality swiftly and reliably and perform feathering.

With the pitch control device 1 for a windmill, controller self-abnormality detectors 19 are provided as the second abnormality detectors. Accordingly, when the deviation between the output signal from a motor controller 16 and the position of the output shaft of the corresponding induction motor 11 is increased, it is possible to detect this swiftly and reliably, and perform feathering.

With the pitch control device 1 for a windmill, controller mutual abnormality detectors 28 are provided as the second abnormality detectors. Accordingly, when the mutual deviation among the output signals from the motor controllers 16 respectively corresponding to the three blades 105 is increased, it is possible to detect this swiftly and reliably, and perform feathering.

Note that the pitch control device 1 for a windmill uses induction motors 11 as the motors of the pitch drive devices 108. Use of direct-current motors as the motors of the pitch drive devices 108 may lead to problems, including, for example, a decrease in ease of the maintenance, an increase in the outer diameter, and a reduction in the response performance of the motors. Use of brushless motors as the motors of the pitch drive devices 108 is problematic in that an additional drive controller is required, although these motor are favorable in terms of maintenance.

Although an embodiment of the present invention has been described thus far, the present invention is not limited to the above-described embodiment, and various modifications may be made within the scope recited in the claims. For example, the following modifications are possible.

(1) Although this embodiment has been described, taking, as an example, a configuration in which the first abnormality detector is installed independently, this need not be the case. For example, the first abnormality detector may be installed as a unit in which it is integrated with the pitch controller, or may be installed for some or all of the motor control units.

(2) Although this embodiment has been described, taking, as an example, a configuration in which a plurality of types of second abnormality detectors are provided, this need not be the case; some of the types of the second abnormality detectors illustrated in this embodiment may be provided. Although this embodiment has been described, taking, as an example, a configuration in which the second abnormality detector is installed in the motor control unit and a configuration in which the second abnormality detector is installed independently of the motor control unit, this need not be the case; it is possible to adopt a configuration in which the second abnormality detector is installed as a unit in which it is integrated with the pitch controller.

### Industrial Applicability

The present invention is widely applicable as a pitch control device for a windmill that includes a battery capable of applying electricity to a motor of a pitch drive device for changing the pitch angle of a blade of a windmill that is provided rotatably on a main shaft portion of the windmill, and that controls the pitch angle of the blade with the electricity of the battery such that the pitch angle is changed in a direction in which the wind pressure exerted on the blade is reduced.

### Descriptions of Reference Numerals

- 1: Pitch control device for a windmill
- 11, 11a, 11b, 11c: Induction motor
- 12, 12a, 12b, 12c: Battery
- 13: Pitch controller
- 15: First abnormality detector
- 16, 16a, 16b, 16c: Motor controller
- 17, 17a, 17b, 17c: Switching box
- 19, 19a, 19b, 19c: Controller self-abnormality detector (second abnormality detector)
- 24: CPU abnormality detector (second abnormality detector)
- 25: Motor control abnormality detector (second abnormality detector)
- 26: Power abnormality detector (second abnormality detector)
- 27: Transmission abnormality detector (second abnormality detector)
- 28: Controller mutual abnormality detector (second abnormality detector)
- 29: Battery abnormality detector (second abnormality detector)
- 101: Windmill
- 104: Hub (main shaft portion)
- 105: Blade
- 108: Pitch drive device

## Claims

1. A pitch control device (1) for a windmill that includes a battery (12) capable of applying electricity to a motor (11) of a pitch drive device (1) for changing a pitch angle of a blade (105) of a windmill (101) that is rotatably provided on a main shaft portion (104) of the windmill (101), and that controls the pitch angle of the blade (105) with the electricity of the battery (12) such that the pitch angle is changed in a direction in which the wind pressure exerted on the blade (105) is reduced, the pitch control device (1) comprising:
a motor controller (16) that controls storage and discharge of electricity into and from the battery (12) and controls the motor (11) based on a control signal from a pitch controller (13) that outputs the control signal for changing the pitch angle of the blade (105);
an induction motor (11) provided as the motor;
a switching box (17) capable of switchably connecting an external power source supplied as an alternating-current power source and the battery (12) to the induction motor;
a first abnormality detector (15) that detects an abnormality of the external power source; and
a second abnormality detector (19, 24-29) that detects an abnormality of the motor controller (16);
wherein, during a normal operation, the motor controller (16) controls the induction motor (11) based on a control signal from the pitch controller (13),
wherein, when the first abnormality detector (15) detects an abnormality of the external power source, the switching box (17) connects the induction motor (11) to the battery (12), and controls the pitch angle of the blade (105) such that the pitch angle is changed in a direction in which wind pressure is reduced, and,
when the second abnormality detector (19, 24-29) detects an abnormality of the motor controller (16), the switching box (17) directly connects the induction motor (11) to the external power source without the motor controller (16) intervening, and controls the pitch angle of the blade (105) such that the pitch angle is changed in a direction in which wind pressure is reduced.

2. The pitch control device (1) for a windmill according to claim 1, comprising, as the second abnormality detector (24), a CPU abnormality detector (24) that monitors a CPU of the motor controller (16) and emits an abnormality signal upon detection of an abnormality.

3. The pitch control device (1) for a windmill according to claim 1 or 2, comprising, as the second abnormality detector (25), a motor control abnormality detector (25) that monitors an output signal from the motor controller (16) to the induction motor (11) and emits an abnormality signal upon detection of an abnormality.

4. The pitch control device (1) for a windmill according to any one of claims 1 to 3, comprising, as the second abnormality detector (26), a power abnormality detector (26) that monitors the temperature of a power module portion for controlling electricity supplied to the induction motor (11) and emits an abnormality signal upon detection of an abnormality.

5. The pitch control device (1) for a windmill according to any one of claims 1 to 4, comprising, as the second abnormality detector (27), a transmission abnormality detector (27) that monitors the control signal transmitted from the pitch controller (13) to the motor controller (16) and emits an abnormality signal upon detection of an abnormality.

6. The pitch control device (1) for a windmill according to any one of claims 1 to 5, comprising, as the second abnormality detector (19), a controller self-abnormality detector (19) that monitors the output signal from the motor controller (16) and a position of an output shaft of the induction motor (11), detects an abnormality when the magnitude of deviation in correspondence between the output signal and the position of the output shaft exceeds a predetermined value, and emits an abnormality signal.

7. The pitch control device (1) for a windmill according to any one of claims 1 to 6,
wherein the motor controller (16), the battery (12), and the second abnormality detector are provided for each of the three blades (105) provided in the windmill (101), and
the pitch control device (1) comprises, as at least one of the second abnormality detectors, a controller mutual abnormality detector (28) that compares output signals from the motor controllers (16) with one another, detects an abnormality when the magnitude of deviation of the output signals between the motor controllers (16) exceeds a predetermined value, and emits an abnormality signal.

## Patentansprüche

1. Anstellwinkelsteuervorrichtung (1) für eine Windkraftanlage, die eine Batterie (12) umfasst, die in der Lage ist, Elektrizität in einen Motor (11) einer Anstellwinkel-Antriebsvorrichtung (1) einzuspeisen, um einen Anstellwinkelwinkel eines Flügels (105) einer Windkraftanlage (101) zu verändern, der drehbar an einem Hauptwellenabschnitt (104) der Windkraftanlage (101) angeordnet ist, und die den Anstellwinkelwinkel des Flügels (105) mit der Elektrizität der Batterie (12) dergestalt steuert, dass der Anstellwinkelwinkel in einer Richtung geändert wird, in welcher der auf den Flügel (105) wirkende Winddruck verringert ist, wobei die Anstellwinkelsteuervorrichtung (1) Folgendes umfasst:
eine Motorsteuereinheit (16), welche die Speicherung und das Entladen von Elektrizität in die bzw. aus der Batterie (12) steuert und den Motor (11) auf der Grundlage eines Steuersignals von einer Anstellwinkelsteuereinheit (13) steuert, die das Steuersignal zum Ändern des Anstellwinkelwinkels des Flügels (105) ausgibt;
einen Induktionsmotor (11), der als der Motor bereitgestellt ist;
einen Schaltkasten (17), der in der Lage ist, eine externe Energiequelle, die als eine Wechselstromenergiequelle zugeführt wird, und die Batterie (12) durch Umschalten mit dem Induktionsmotor zu verbinden;
einen ersten Anomaliedetektor (15), der eine Anomalie der externen Energiequelle detektiert; und
einen zweiten Anomaliedetektor (19, 24-29), der eine Anomalie der Motorsteuereinheit (16) detektiert;
wobei die Motorsteuereinheit (16) während eines normalen Betriebes den Induktionsmotor (11) auf der Grundlage eines Steuersignals von der Anstellwinkelsteuereinheit (13) steuert,
wobei, wenn der erste Anomaliedetektor (15) eine Anomalie der externen Energiequelle detektiert, der Schaltkasten (17) den Induktionsmotor (11) mit der Batterie (12) verbindet und den Anstellwinkelwinkel des Flügels (105) dergestalt steuert, dass der Anstellwinkelwinkel in einer Richtung geändert wird, in welcher der Winddruck reduziert ist, und
wenn der zweite Anomaliedetektor (19, 24-29) eine Anomalie der Motorsteuereinheit (16) detektiert, der Schaltkasten (17) den Induktionsmotor (11) direkt mit der externen Energiequelle verbindet, ohne dass sich die Motorsteuereinheit (16) dazwischen befindet, und den Anstellwinkelwinkel des Flügels (105) dergestalt steuert, dass der Anstellwinkelwinkel in einer Richtung geändert wird, in welcher der Winddruck reduziert ist.

2. Anstellwinkelsteuervorrichtung (1) für eine Windkraftanlage nach Anspruch 1, das, als den zweiten Anomaliedetektor (24), einen CPU-Anomaliedetektor (24) umfasst, der eine CPU der Motorsteuereinheit (16) überwacht und bei Detektion einer Anomalie ein Anomaliesignal aussendet.

3. Anstellwinkelsteuervorrichtung (1) für eine Windkraftanlage nach Anspruch 1 oder 2, die, als den zweiten Anomaliedetektor (25), einen Motorsteuerungsanomaliedetektor (25) umfasst, der ein Ausgangssignal von der Motorsteuereinheit (16) zu dem Induktionsmotor (11) überwacht und bei Detektion einer Anomalie ein Anomaliesignal aussendet.

4. Anstellwinkelsteuervorrichtung (1) für eine Windkraftanlage nach einem der Ansprüche 1 bis 3, die, als den zweiten Anomaliedetektor (26), einen Energieanomaliedetektor (26) umfasst, der die Temperatur eines Energiemodulabschnitts zum Steuern der dem Induktionsmotor (11) zugeführten Elektrizität überwacht und bei Detektion einer Anomalie ein Anomaliesignal aussendet.

5. Anstellwinkelsteuervorrichtung (1) für eine Windkraftanlage nach einem der Ansprüche 1 bis 4, die, als den zweiten Anomaliedetektor (27), einen Übertragungsanomaliedetektor (27) umfasst, der das Steuersignal überwacht, das von der Anstellwinkelsteuereinheit (13) zu der Motorsteuereinheit (16) gesendet, und bei Detektion einer Anomalie ein Anomaliesignal aussendet.

6. Anstellwinkelsteuervorrichtung (1) für eine Windkraftanlage nach einem der Ansprüche 1 bis 5, die, als den zweiten Anomaliedetektor (19), einen Steuereinheit-Eigenanomaliedetektor (19) umfasst, der das Ausgangssignal von der Motorsteuereinheit (16) und eine Position einer Abtriebswelle des Induktionsmotors (11) überwacht, eine Anomalie detektiert, wenn die Größenordnung der Abweichung einer Entsprechung zwischen dem Ausgangssignal und der Position der Abtriebswelle einen zuvor festgelegten Wert übersteigt, und ein Anomaliesignal aussendet.

7. Anstellwinkelsteuervorrichtung (1) für eine Windkraftanlage nach einem der Ansprüche 1 bis 6, wobei
die Motorsteuereinheit (16), die Batterie (12) und der zweite Anomaliedetektor für jeden der drei Flügel (105) bereitgestellt sind, die in der Windkraftanlage (101) vorhanden sind, und
die Anstellwinkelsteuervorrichtung (1), als mindestens einen der zweiten Anomaliedetektoren, einen Steuereinheit-Gegenseitigkeitsanomaliedetektor (28) umfasst, der Ausgangssignale von den Motorsteuereinheiten (16) miteinander vergleicht, eine Anomalie detektiert, wenn die Größenordnung der Abweichung der Ausgangssignals zwischen den Motorsteuereinheiten (16) einen zuvor festgelegten Wert übersteigt, und ein Anomaliesignal aussendet.

## Revendications

1. Dispositif de régulation par calage variable de pale (1) destiné à une éolienne qui comporte une batterie (12) apte à appliquer de l'électricité à un moteur (11) de dispositif de calage de pale (1) destiné à modifier un angle de calage d'une pale (105) d'éolienne (101), qui est disposée de manière à pouvoir tourner sur une partie arbre principal (104) de l'éolienne (101), et qui règle l'angle de calage de la pale (105) avec l'électricité de la batterie (12), de manière à modifier l'angle de calage dans une direction dans laquelle la pression du vent exercée sur la pale (105) est réduite, le dispositif de régulation par calage variable de pale (1) comprenant :
un dispositif de commande de moteur (16) qui commande le stockage et la décharge d'électricité dans et à partir de la batterie (12) et commande le moteur (11) sur la base d'un signal de commande provenant d'un dispositif de commande de calage de pale (13) qui délivre le signal de commande destiné à modifier l'angle de calage de la pale (105) ;
un moteur à induction (11) mis en place en tant que moteur ;
une boîte de commutation (17) apte à connecter par commutation une source d'alimentation externe fournie en tant que source d'alimentation en courant alternatif et la batterie (12) au moteur à induction ;
un premier détecteur d'anomalie (15) qui détecte une anomalie de la source d'alimentation externe ; et
un second détecteur d'anomalie (19, 24 à 29) qui détecte une anomalie du dispositif de commande de moteur (16) ;
dans lequel, en cours de fonctionnement normal, le dispositif de commande de moteur (16) commande le moteur à induction (11) sur la base d'un signal de commande provenant du dispositif de commande de calage de pale (13),
dans lequel, lorsque le premier détecteur d'anomalie (15) détecte une anomalie de la source d'alimentation externe, la boîte de commutation (17) connecte le moteur à induction (11) à la batterie (12), et commande l'angle de calage de la pale (105) de manière à modifier l'angle de calage dans une direction dans laquelle la pression du vent est réduite, et
lorsque le second détecteur d'anomalie (19, 24 à 29) détecte une anomalie du dispositif de commande de moteur (16), la boîte de commutation (17) connecte directement le moteur à induction (11) à la source d'alimentation externe, sans intervention du dispositif de commande de moteur (16), et commande l'angle de calage de la pale (105) de manière à modifier l'angle de calage dans une direction dans laquelle la pression du vent est réduite.

2. Dispositif de régulation par calage variable de pale (1) destiné à une éolienne, selon la revendication 1, comprenant, en tant que second détecteur d'anomalie (24), un détecteur d'anomalie d'UCT (24) qui surveille une UCT du dispositif de commande de moteur (16) et émet un signal d'anomalie lors de la détection d'une anomalie.

3. Dispositif de régulation par calage variable de pale (1) destiné à une éolienne, selon la revendication 1 ou 2, comprenant, en tant que second détecteur d'anomalie (25), un détecteur d'anomalie de commande de moteur (25) qui surveille un signal de sortie, du dispositif de commande de moteur (16) au moteur à induction (11) et émet un signal d'anomalie lors de la détection d'une anomalie.

4. Dispositif de régulation par calage variable de pale (1) destiné à une éolienne, selon l'une quelconque des revendications 1 à 3, comprenant, en tant que second détecteur d'anomalie (26), un détecteur d'anomalie de puissance (26) qui surveille la température d'une partie module de puissance destinée à commander l'électricité fournie au moteur à induction (11) et émet un signal d'anomalie lors de la détection d'une anomalie.

5. Dispositif de régulation par calage variable de pale (1) destiné à une éolienne, selon l'une quelconque des revendications 1 à 4, comprenant, en tant que second détecteur d'anomalie (27), un détecteur d'anomalie de transmission (27) qui surveille le signal de commande émis du dispositif du dispositif de commande de calage de pas (13) au dispositif de commande de moteur (16) et émet un signal d'anomalie lors de la détection d'une anomalie.

6. Dispositif de régulation par calage variable de pale (1) destiné à une éolienne, selon l'une quelconque des revendications 1 à 5, comprenant, en tant que second détecteur d'anomalie (19), un détecteur d'anomalie intrinsèque de dispositif de commande (19) qui surveille le signal de sortie du dispositif de commande de moteur (16) et une position d'arbre de sortie du moteur à induction (11), détecte une anomalie lorsque la grandeur d'écart de correspondance entre le signal de sortie et la position de l'arbre de sortie dépasse une valeur prédéterminée, et émet un signal d'anomalie.

7. Dispositif de régulation par calage variable de pale (1) destiné à une éolienne, selon l'une quelconque des revendications 1 à 6,
dans lequel le dispositif de commande de moteur (16), la batterie (12) et le second détecteur d'anomalie sont mis en place pour chacune des trois pales (105) mises en place dans l'éolienne (101), et
le dispositif de régulation par calage variable de pale (1) comprend au moins l'un des seconds détecteurs d'anomalie, un détecteur d'anomalie commune de dispositifs de commande (28) qui compare entre eux des signaux de sortie des dispositifs de commande de moteur (16), détecte une anomalie lorsque la grandeur d'écart des signaux de sortie entre les dispositifs de commande de moteur (16) dépasse une valeur prédéterminée, et émet un signal d'anomalie.
